# EUROPEAN PATENT SPECIFICATION

(11) **EP 2 451 211 B1**
(45) Date of publication and mention of the grant of the patent: **30.08.2017**
(21) Application number: 10793601.5
(22) Date of filing: 29.06.2010
(51) Int. Cl.: H04W 36/02, H04W 88/08

(54) **METHOD AND APPARATUS FOR HAND-OFF PROCESSING IN WIRELESS SELF-BACKHAUL TRANSMISSION**
VERFAHREN UND VORRICHTUNG ZUM HANDOFF BEI DRAHTLOSER SELF-BACKHAUL ÜBERTRAGUNG
PROCÉDÉ ET APPAREIL DESTINÉS À TRAITER UN TRANSFERT POUR UNE TRANSMISSION RADIO DITE SELF-BACKHAUL

(30) Priority: 02.07.2009 CN 200910152004
(43) Date of publication of application: 09.05.2012
(73) Proprietor: Huawei Technologies Co., Ltd., Longgang District Shenzhen, Guangdong 518129 (CN)
(72) Inventor: LIN, Gaoquan, Shenzhen Guangdong 518129 (CN); CHEN, Weimin, Shenzhen Guangdong 518129 (CN); LIU, Sheng, Shenzhen Guangdong 518129 (CN)
(74) Representative: Isarpatent
(86) International application number: PCT/CN2010/074666
(87) International publication number: WO 2011/000306

(56) References cited:
- EP-A1- 1 786 217
- EP-A1- 1 786 217
- WO-A2-2008/118994
- WO-A2-2008/118994
- CN-A- 1 901 734
- CN-A- 101 237 681
- CN-A- 101 237 681
- US-A1- 2007 110 004
- US-A1- 2007 110 004

## Description

### FIELD OF THE INVENTION

The present invention relates to the field of communications technologies, and in particular, to a method and an apparatus for handover processing in radio self-backhaul transmission.

### BACKGROUND OF THE INVENTION

A radio self-backhaul transmission mode solves the transmission problem of some mini base stations by using a mobile terminal as a transmission bearer of a base station, that is, through cascading of two radio access links in the same radio access technology. In a radio self-backhaul networking architecture, packet data from a secondary BS (secondary base station) is carried by a backhaul UE (user equipment) and a primary BS (primary base station), and then sent to a core network element, for example, an S-GW (serving-gateway) of LTE (Long Term Evolution), or an AGW (access gateway) of WiMAX (Worldwide Interoperability for Microwave Access).

The backhaul UE is an ordinary UE for the Primary BS. The Primary BS is similar to a macro base station, and supports wide coverage and high movement speed. The Secondary BS is similar to a mini base station, such as a micro BS (micro cell base station), a Pico BS (pico cell base station), or a Femtocell (home base station), supports hotspot coverage, home coverage, enterprise coverage, and low movement speed when having an external backhaul UE or a built-in backhaul UE, and may also be regarded as an L3 relay (a layer-3 relay) base station. The self-backhaul base station in the following also refers to an L3 relay.

Radio self-backhaul is suitable for supplementary coverage, especially in an application scenario where the requirement for the rate of the base station is not high and wired network deployment is difficult or cost is high, for example, the scenario with coverage holes, indoor coverage scenario, and home coverage scenario, and is also used to improve user performance at cell edges. The cost of the supplementary coverage solution is low. The solution is an optimal combination of a low-cost radio transmission network and low-cost radio supplementary coverage. Therefore, reducing the bearer cost of the base station through self-backhaul transmission is also an effective solution. In addition, compared with microwave transmission, self-backhaul transmission supports a point-to-multipoint mode, enables unified maintenance and unified installation, solves the problem of the non line of sight transmission to some extent, and may reduce the operating expenditure greatly.

Whether applied in a WCDMA (Wide-band Code Division Multiple Access) or LTE (including FDD and TDD; FDD: frequency division duplex; TDD: time division duplex) or WiMAX system, radio self-backhaul transmission is expected to be implemented with a minimum impact on the existing standard protocols. If no optimization is performed, self-backhaul mobility may be implemented according to the existing standard handover procedure.

In the prior art, due to features of self-backhaul, that is, radio resources are used between the self-backhaul base station/L3 Relay and the eNB (eNodeB, base station), before the UE completes a handover and the MME (Mobility Management Entity) updates the S-GW bearer, all downlink data may still be sent to the self-backhaul base station/L3 Relay along the tunnel before the handover, but because the self-backhaul base station/L3 Relay has sent a handover command to the UE, the UE may no longer receive downlink data under the self-backhaul base station/L3 Relay; in addition, according to the standard handover procedure, the data that is already sent to the self-backhaul base station/L3 Relay must be forwarded to the target eNB, and the self-backhaul base station/L3 Relay may request backhaul air interface resources to forward the received data. Therefore, radio resources are wasted due to the round trip of the downlink data flow between the self-backhaul base station/L3 Relay. In addition, because of the round trip of the data flow, packet loss or transmission delay may occur.

CN 101 237 681 A sets forth data transmission method in a switching process, apply to including it in excursive management entity MME/UPE, source gradual progress base station and terminal LTE system, includes when the terminal switches over, the MME/UPE buffers the data packet and sends the buffered data packet to the terminal after handover.

### SUMMARY OF THE INVENTION

The present invention provides a method, a base station and a communication system for handover processing in radio self-backhaul transmission, which is realized as the disclosed in the claims.

In embodiments of the present invention, a primary base station buffers downlink packets after receiving a handover request acknowledgement message sent by a self-backhaul base station; the primary base station sends the buffered downlink packets to a terminal through a target base station; therefore, a seamless handover of radio self-backhaul transmission may be implemented without the need of performing round-trip transmission of all downlink packet data between the primary base station and the self-backhaul base station, which may not only reduce the waste of radio resources between the primary base station and the self-backhaul base station and improve the air interface resource utilization, but also improve data transmission reliability and shorten the packet transmission delay.

In embodiments of the present invention, a self-backhaul base station receives a handover request acknowledgement message sent by a primary base station; if the handover request acknowledgement message carries a downlink packet start SN that is buffered by the primary base station after a relay link begins to be detunnelled, the self-backhaul base station determines, according to the downlink packet start SN, a downlink packet unbuffered by the primary base station, and sends the unbuffered downlink packet; if the handover request acknowledgement message does not carry the downlink packet start SN, the self-backhaul base station receives a packet lost request message sent by the primary base station, and sends, according to the packet lost request message, the downlink packet unbuffered by the primary base station; therefore, the self-backhaul base station does not need to send the downlink packets buffered by the primary base station, which avoids round-trip transmission of all downlink packet data between the primary base station and the self-backhaul base station, and may reduce the waste of radio resources between the primary base station and the self-backhaul base station and improve the air interface resource utilization, and may also improve data transmission reliability and shorten the packet transmission delay.

### BRIEF DESCRIPTION OF THE DRAWINGS

To make the technical solution in the embodiments of the present invention or in the prior art clearer, the accompanying drawings used in the description of the embodiments of the present invention or the prior art are briefly described below. Apparently, the accompanying drawings illustrate some exemplary embodiments of the present invention, and persons skilled in the art may derive other drawings from these drawings without creative efforts. In the drawings:
FIG. 1 is a schematic diagram illustrating a data flow direction of a UE handover from a self-backhaul base station/L3 Relay to a same eNB according to an embodiment of the present invention;
FIG. 2 is a schematic diagram illustrating a data flow direction of a UE handover from a self-backhaul base station/L3 Relay to another eNB according to an embodiment of the present invention;
FIG. 3 is a schematic diagram illustrating a data flow direction of a handover between self-backhaul base stations/L3 Relays under a same eNB according to another embodiment of the present invention;
FIG. 4 is a schematic diagram illustrating a data flow direction of a handover between self-backhaul base stations/L3 Relays under different eNBs according to still another embodiment of the present invention;
FIG. 5 and FIG. 8 are schematic flowcharts of a method for handover processing in radio self-backhaul transmission according to embodiments of the present invention;
FIG. 6 and FIG. 7 are flowcharts of specific instances of a method for handover processing in radio self-backhaul transmission according to embodiments of the present invention;
FIG. 9, FIG. 10, and FIG. 11 are schematic structural diagrams of eNBs according to embodiments of the present invention; and
FIG. 12 and FIG. 13 are schematic structural diagrams of communication systems according to embodiments of the present invention.

### DETAILED DESCRIPTION OF THE EMBODIMENTS

To make the objective, technical solution, and merit of the present invention clearer, the following describes the embodiments of the present invention in detail with reference to the accompanying drawings. The embodiments here are exemplary embodiments to explain the present invention but the present invention is not limited to the embodiments.

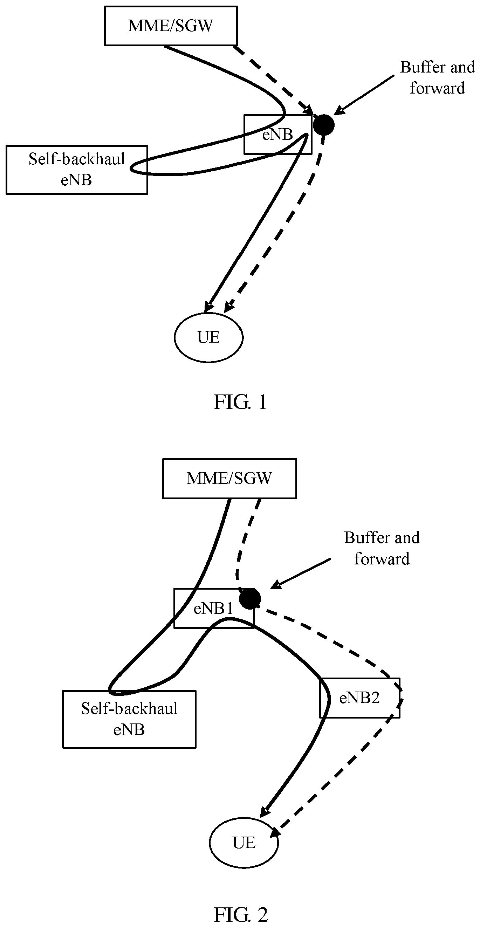

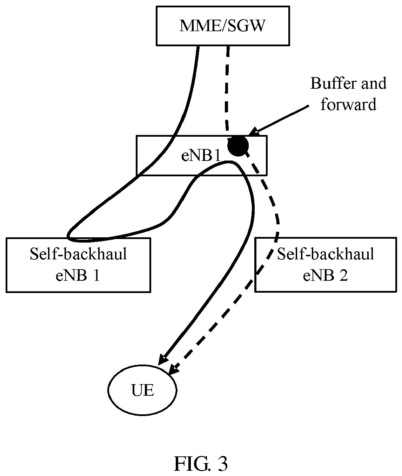

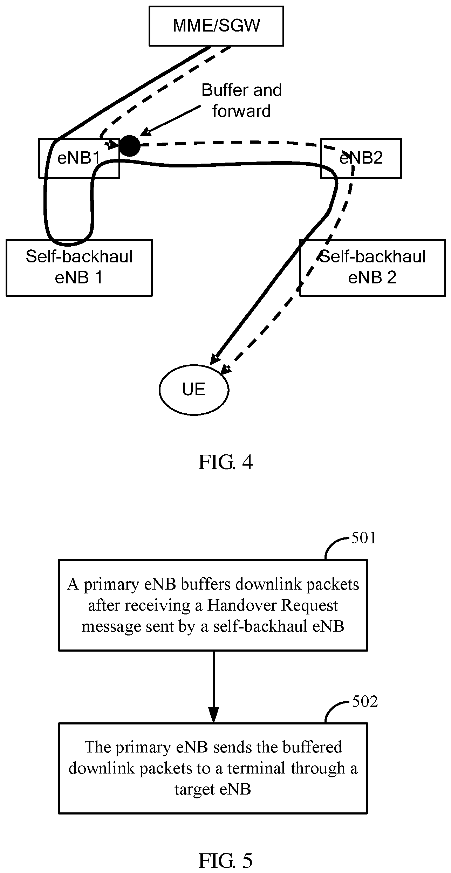

When a UE initiates a handover from a self-backhaul base station/L3 Relay to any other eNB, downlink data flow directions in four handover scenarios in the prior art are as shown in FIG. 1-4. FIG. 1 illustrates a data flow direction of a UE handover from a self-backhaul base station/L3 Relay to a same eNB. FIG. 2 illustrates a data flow direction of a UE handover from a self-backhaul base station/L3 Relay to another eNB. FIG. 3 illustrates a data flow direction of a handover between self-backhaul base stations/L3 Relays under the same eNB. FIG. 4 illustrates a data flow direction of a handover between self-backhaul base stations/L3 Relays under different eNBs.

As seen from FIGS. 1-4, in the prior art, before an MME sends a bearer update message to an S-GW, the forwarding paths of downlink data flows are similar to those solid-line forwarding paths in FIG. 1-4. Because the transmission between the eNB and the self-backhaul base station/L3 relay is based on radio air interface , a round trip of a downlink data flow exists, which occupies double radio resources and also causes a longer packet transmission delay, and as a result increases the possibility of packet loss in downlink data transmission. To optimize the data flow direction before the MME sends the bearer update message to the S-GW so as to save the precious radio air interface resources between the eNB and the self-backhaul base station/L3 Relay, the embodiments of the present invention consider forwarding according to dotted paths in FIG. 1-4, in order to eliminate the waste of air interface resources between the eNB and the relay and also improve reliability of data transmission and shorten the packet transmission delay.

As shown in FIG. 5, in an embodiment of the present invention, the procedure of a method for handover processing in radio self-backhaul transmission may be as follows:
Step 501: A primary base station buffers downlink packets after receiving a handover request message sent by a self-backhaul base station.

Step 502: The primary base station sends the buffered downlink packets to a terminal through a target eNB.

In the procedure shown in FIG. 5, the primary base station buffers downlink packets after receiving a handover request message sent by the self-backhaul base station; the primary base station sends the buffered downlink packets to the terminal through the target eNB; compared with the prior art in which the primary base station does not buffer the downlink packets but directly forwards all downlink packets to the self-backhaul base station after receiving a Handover request message sent by the self-backhaul base station, the embodiment of the present invention may implement a seamless handover of radio self-backhaul transmission without the need of performing round-trip transmission of all downlink packet data between the primary base station and the self-backhaul base station, which may not only reduce the waste of radio resources between the primary base station and the self-backhaul base station and improve the air interface resource utilization, but also improve data transmission reliability and shorten the packet transmission delay.

In an embodiment, the handover request message in step 501 may carry downlink tunnel information, for example, information such as a downlink GTP tunnel endpoint; in this way, after receiving the handover request message, the primary base station may detunnel the downlink tunnel according to the downlink tunnel information in the handover request message, and obtain and buffer the downlink packets. In the embodiment, the primary base station may extract downlink tunnel information from the handover request message and buffer the information to facilitate detunnelling the downlink tunnel. Of course, as shown in FIG. 1-4, the primary base station may be the target base station of the handover or may not be the target eNB of the handover. When the primary base station is the target eNB of the handover, the downlink tunnel may be detunnelled according to the downlink tunnel information to obtain the downlink packets when the downlink tunnel information is buffered. When the primary base station is not the target eNB of the handover, the primary base station may buffer the downlink tunnel information first, and after receiving a handover request message, detunnel the downlink tunnel according to the downlink tunnel information, and obtain the downlink packets.

In another example after buffering downlink packets, the primary base station may no longer forward the downlink packets to the self-backhaul base station, or may continue to forward the downlink packets to the self-backhaul base station.

If the primary base station no longer forwards the downlink packets to the self-backhaul base station after buffering the downlink packets, the primary base station needs to forward to the target eNB the packet data that is not sent by the self-backhaul base station when forwarding an sequence number status transfer message sent from the self-backhaul base station to the target eNB.

After the self-backhaul base station sends the downlink packets that are sent unsuccessfully and not sent, the primary base station receives an end marker packet or signaling sent by the self-backhaul base station, and forwards the buffered downlink packets to the target eNB. After capturing the end marker packet or signaling sent from the S-GW to the self-backhaul base station, the primary base station stops detunnelling the downlink tunnel, and sends the end marker packet or signaling to the target eNB after forwarding all buffered downlink packets.

A specific instance is provided below to describe the method for handover processing in radio self-backhaul transmission. In this instance, the primary base station no longer forwards the downlink packets to the self-backhaul base station after buffering the downlink packets. In addition, because the embodiment of the present invention is applied to a handover through an S1 interface and a handover through an X2 interface, while according to an LTE handover procedure, a main difference between the handover through the S1 interface and the handover through the X2 interface is that a handover message needs to be forwarded through the MME. This instance and the subsequent embodiments are all described by taking the handover through the X2 interface as an example, and the handover procedure of the S1 interface may be obtained by analogy.

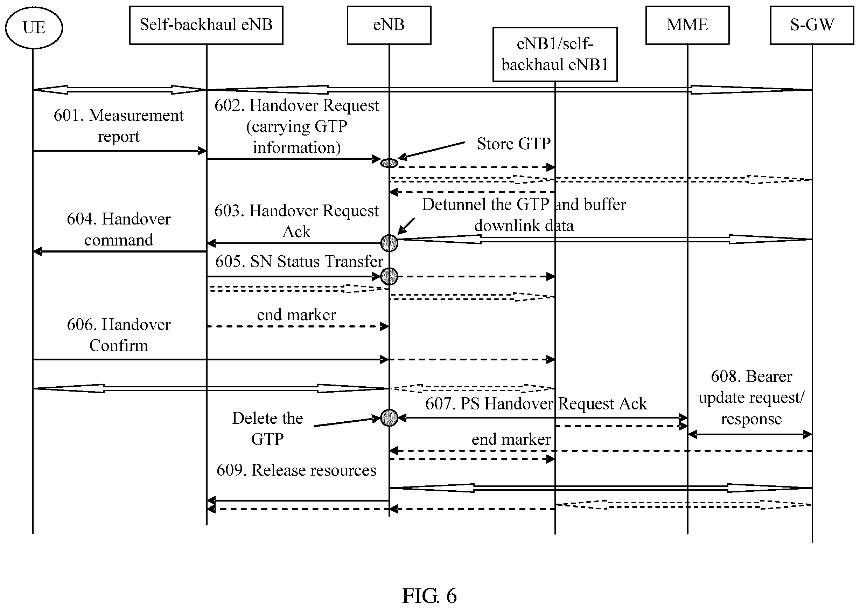

As shown in FIG. 6, in this instance, a self-backhaul base station/L3 Relay initiates a handover, and a primary base station, buffers detunnelled downlink data; meanwhile, the downlink data is not sent to the self-backhaul base station/L3 Relay. The specific steps of the handover processing procedure may be as follows:
Step 601: The UE sends a measurement report to the self-backhaul base station when detecting that a handover report needs to be sent; in this instance, assuming that the data channel of the UE under the self-backhaul base station is already established, as shown by the hollow arrow in FIG. 6, the transmission between the self-backhaul base station and the S-GW is implemented in a GTP tunnel mode.

Step 602: The self-backhaul base station receives a measurement report message, and sends a handover request message to a selected target base station, where the handover request message needs to carry downlink tunnel information of the self-backhaul eNB, such as the information of the GTP tunnel endpoint. In FIG. 6, solid lines are used to illustrate a signaling procedure in which the target base station is the primary base station of the self-backhaul base station; if the target base station is other primary base stations, or other self-backhaul base stations, such as the primary base station1/self-backhaul base station1 shown in FIG. 6, the self-backhaul base station communicates with the target base station through the primary base station, and in this case, the signaling procedure is indicated by dotted lines in FIG. 6. In addition, in FIG. 6, the solid line with a hollow arrow indicates the data flow direction when the target base station is the primary base station of the self-backhaul base station; the dotted line with a hollow arrow indicates the data flow direction when the target base station is other primary base stations or other self-backhaul base stations. The primary base station of the self-backhaul base station receives the handover request message, checks whether a downlink GTP tunnel endpoint exists, and if the downlink GTP tunnel endpoint exists, the primary base station stores relevant information of the GTP tunnel. When the self-backhaul base station selects the primary base station as the target base station, the handover request message no longer needs to be forwarded; if the self-backhaul base station selects other primary base stations or other self-backhaul base stations as the target base station, such as the primary base station1/self-backhaul base station1 shown in FIG. 6, the primary base station needs to continue to forward the handover request message to the target base station, and may delete the GTP tunnel information of the self-backhaul base station in an original handover request message; at this time, an uplink tunnel between the target base station of the handover and the S-GW is already available.

Step 603: If the primary base station of the self-backhaul base station is the target base station, the primary base station, while storing the downlink tunnel information carried in the handover request message, begins to use the downlink tunnel information to detunnel and buffer downlink packets but does not forward the downlink packets to the self-backhaul base station, and meanwhile, sends a handover request acknowledgement message to the self-backhaul base station; if the primary base station of the self-backhaul base station is not the target base station, the primary base station, after receiving the handover request acknowledgement message returned from the target base station, begins to use stored downlink tunnel information to detunnel and buffer downlink packets but does not forward the downlink packets to the self-backhaul base station, and meanwhile, forwards a received handover request acknowledgement message to the self-backhaul base station.

Step 604: After receiving the handover request acknowledgement message sent by the primary base station, the self-backhaul base station sends a handover command to the UE.

Step 605: The self-backhaul base station sends an SN status transfer message to the target base station; if the self-backhaul base station still has packet data that is not sent, the packet data needs to be forwarded to the target base station through the dotted line with a hollow arrow shown in FIG. 6; when the self-backhaul base station sends all the downlink packets of the UE that are sent unsuccessfully and are not sent, the self-backhaul base station notifies the primary base station that there is already no downlink data by sending an end marker packet or a signaling message.

Step 606: The UE begins to access the target base station after receiving the handover command, and then sends a handover confirm message to the target base station, and at this time, the uplink data channels and downlink data channels between the UE and the target base station are already established; the downlink data forwarded from step 605 may be sent to the UE.

Step 607: The primary base station receives the end marker packet or signaling message sent by the self-backhaul base station in step 605, and begins to forward buffered packets to the target base station; meanwhile, after receiving the Handover Confirm message from the UE, the target base station sends a PS (packet-switched) handover request to the MME, where the message carries downlink tunnel information of the target base station, such as downlink GTP tunnel endpoint information, and if it is in a dual-tunnel mode and the primary base station is used as the target base station,, an original downlink tunnel may be selected for use.

Step 608: The MME sends a bearer update request to the S-GW, and for the dual-tunnel mode, the MME may instruct the S-GW to continue to use an original tunnel endpoint; at this time, the uplink tunnels and downlink tunnels between the target base station and the S-GW are already established; the S-GW sends an end marker packet to the source base station of the handover, namely, the self-backhaul base station, or directly sends a signaling message to notify the primary base station that there is no downlink data to be sent to the source base station; after capturing the end marker packet, the primary base station deletes stored GTP tunnel information and no longer detunnels the tunnel; and the primary base station sends an end marker packet to the target base station after forwarding all the buffered downlink data.

Step 609: The target base station receives a PS handover request acknowledgement message sent by the MME, and sends a resource release message to the source base station, namely, the self-backhaul base station, so that the source base station releases relevant bearer resources.

In the procedure shown in FIG. 6, if a handover target is the primary base station itself, the primary base station completes the operation of the primary base station and the operation of the target base station simultaneously to ensure sequential transmission.

If the primary base station continues to forward the downlink packets to the self-backhaul base station after buffering the downlink packets, the primary base station may send a handover request acknowledgement message to the self-backhaul base station, where the handover request acknowledgement message carries a downlink packet start SN that is buffered by the primary base station after a relay link begins to be detunnelled; and while forwarding the SN status transfer message sent from the self-backhaul base station to the target base station, forwards to the target base station a downlink packet that is determined by the self-backhaul base station according to the downlink packet start SN and that is unbuffered by the primary base station.

If the above handover request acknowledgement message does not carry the downlink packet start SN, the primary base station may also send a packet lost request message, where the packet lost request message instructs the self-backhaul base station to send a downlink packet unbuffered by the primary base station.

When forwarding the SN status transfer message sent from the self-backhaul base station to the target base station, the primary base station may also determine a successfully sent downlink packet in the buffered downlink packets according to the SN status information of the relay link in the SN status transfer message, and does not forward the successfully sent downlink packet to the target base station.

Of course, the SN status transfer message may also carry the SN status information of the access link. The mapping relationship between the SN status information of the access link and the SN status information of the relay link is maintained by the eNB.

After the self-backhaul base station sends the downlink packets, including the downlink packets that are unsuccessfully sent and not sent, the primary base station receives the end marker packet or signaling sent from the self-backhaul base station, and forwards the buffered downlink packets to the target base station. After capturing the end marker packet or signaling sent from the S-GW to the self-backhaul base station, the primary base station stops detunnelling the downlink tunnel, and sends the end marker packet or signaling to the target base station after forwarding all buffered downlink packets.

A specific instance is provided below to describe the method for handover processing in radio self-backhaul transmission. In this instance, the primary base station continues to forward the downlink packets to the self-backhaul base station after buffering the downlink packets. Likewise, the handover through the X2 interface is taken as an example.

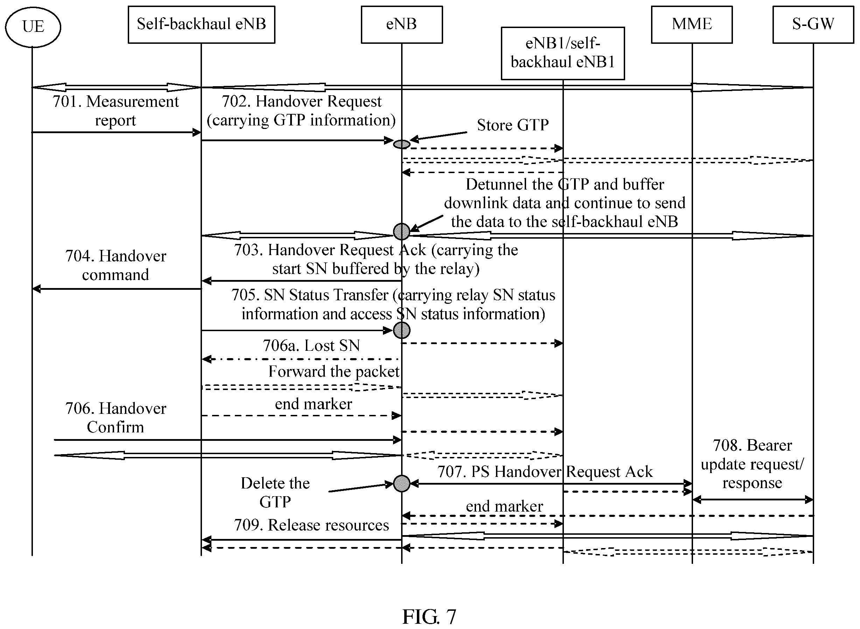

In this instance, the self-backhaul base station/L3 Relay initiates a handover, and the primary base station continues to send the downlink data to the self-backhaul base station/L3 Relay while buffering detunnelled downlink data; as shown in FIG. 7, the specific steps of the handover processing procedure may be as follows:
Step 701: The UE sends a measurement report to the self-backhaul base station when detecting that a handover report needs to be sent; in this instance, assuming that the data channel of the UE under the self-backhaul base station is already established, as shown by the hollow arrow in FIG. 7, the transmission between the self-backhaul base station and the S-GW is implemented in the GTP tunnel mode.

Step 702: The self-backhaul base station receives a measurement report message, and sends a handover request message to the selected target base station, where the handover request message needs to carry downlink tunnel information of the self-backhaul eNB, such as the information of the GTP tunnel endpoint. In FIG. 7, solid lines are used to illustrate a signaling procedure in which the target base station is the primary base station of the self-backhaul base station; if the target base station is other primary base stations or other self-backhaul base stations, such as the primary base station1/self-backhaul base station1 shown in FIG. 7, the self-backhaul base station communicates with the target base station through the primary base station, and in this case the signaling procedure is indicated by dotted lines in FIG. 7. In addition, in FIG. 6, the solid line with a hollow arrow indicates the data flow direction when the target base station is the primary base station of the self-backhaul base station; the dotted line with a hollow arrow indicates the data flow direction when the target base station is other primary base stations or other self-backhaul base stations. The primary base station of the self-backhaul base station receives the handover request message, checks whether a downlink GTP tunnel endpoint exists, and if the downlink GTP tunnel endpoint exists, the primary base station stores the relevant information of the GTP tunnel. When the self-backhaul base station selects the primary base station as the target base station, the handover request message no longer needs to be forwarded; if the self-backhaul base station selects other primary base stations or other self-backhaul base stations as the target base station, such as the primary base station1/self-backhaul base station1 shown in FIG. 7, the primary base station needs to continue to forward the handover request message to the target base station, and before the forwarding, the primary base station may delete the GTP tunnel information of the self-backhaul base station in the original handover request message; at this time, the uplink tunnel between the target base station of the handover and the S-GW is already available.

Step 703: If the primary base station of the self-backhaul base station is the target base station, the primary base station, while storing the downlink tunnel information carried in the handover request message, begins to use the downlink tunnel information to detunnel and buffer downlink packets and continues to forward the downlink packets to the self-backhaul base station, and meanwhile, sends a handover request acknowledgement message to the self-backhaul base station, where the message carries a downlink packet start SN that is buffered by the primary base station after a relay link begins to be detunnelled; if the primary base station of the self-backhaul base station is not the target base station, the primary base station, after receiving the handover request acknowledgement message returned from the target base station, begins to use the stored downlink tunnel information to detunnel and buffer downlink packets, and meanwhile, continues to forward the downlink packets to the self-backhaul base station. In the handover request acknowledgement message forwarded to the self-backhaul base station, the downlink packet start SN that is buffered by the primary base station after the relay link begins to be detunnelled is added.

Step 704: After receiving the handover request acknowledgement message sent by the primary base station, the self-backhaul base station sends a handover command to the UE.

Step 705: The self-backhaul base station sends an SN status transfer message to the target base station, where the message carries the SN status information of the access link and the SN status information of the relay link, for example, information such as the SN of a next downlink packet, a counter, and a downlink packet bitmap; the primary base station receives the SN status transfer message, determines, according to the SN status information of the relay link carried in the message, which data in the buffered downlink data is already successfully sent, and no longer forwards the sent data to the target base station; the primary base station forwards the SN status transfer message carrying the SN status information of the access link to the target base station; if the self-backhaul base station has packet data that is not sent at this time, the self-backhaul base station determines, according to the downlink packet start SN buffered in the primary base station and transmitted in step 703, a packet unbuffered by the primary base station, and forwards the packet to the target base station through the dotted line with a hollow arrow shown in FIG. 7; when the self-backhaul base station sends the packets of the UE that are not sent successfully and not sent, the self-backhaul base station notifies the primary base station that there is already no downlink data by sending an end marker packet or a signaling message.

Step 706: The UE begins to access the target base station after receiving the handover command, and then sends a Handover Confirm message to the target base station, and at this time, the uplink data channels and downlink data channels from the UE to the target base station are already established; the downlink data forwarded from step 705 may be sent to the UE.

Step 706a: If, in step 703, the primary base station does not carry the start SN of the buffered downlink packets in the handover request acknowledgement message, the primary base station needs to send a packet lost request message actively, where the packet lost request message carries the downlink packet information unbuffered by the primary base station, and the self-backhaul base station sends, according to the packet lost request message, the packet unbuffered by the primary base station, in order to minimize the packet transmission and save air interface resources.

Step 707: The primary base station receives the end marker packet or signaling message sent by the self-backhaul base station in step 705, and begins to forward the buffered packets that are not sent successfully to the target base station; meanwhile, after receiving the Handover Confirm message from the UE, the target base station sends a PS handover request/acknowledge message to the MME, where the PS handover request/acknowledge message carries downlink tunnel information of the target base station, such as downlink GTP tunnel endpoint information, and if the primary base station is used as the target base station in the dual-tunnel mode, the original downlink tunnel may be selected for use.

Step 708: The MME sends a bearer update request to the S-GW, and for the dual-tunnel mode, the MME may instruct the S-GW to continue to use the original tunnel endpoint; at this time, the uplink tunnels and downlink tunnels between the target base station and the S-GW are already established; the S-GW sends an end marker packet to the source base station of the handover, namely, the self-backhaul base station, or directly sends a signaling message to notify the primary base station that there is no downlink data to be sent to the source base station; after capturing the end marker packet, the primary base station deletes the stored GTP tunnel information and no longer detunnel the tunnel; and the primary base station sends an end marker packet to the target base station after forwarding all the buffered downlink data.

Step 709: The target base station receives the PS handover request acknowledgement message sent by the MME, and sends a resource release message to the source base station, namely, the self-backhaul base station, so that the source base station releases the relevant bearer resources.

In the procedure shown in FIG. 7, if the handover target is the primary base station itself, the primary base station completes the operation of the primary base station and the operation of the target base station simultaneously to ensure sequential transmission.

The following further describes the process of processing the SN status information of the relay link and the SN status information of the access link in step 705.

The status information such as the PDCP SN (PDCP: Packet Data Convergence Protocol; SN: Sequence Number) and UL/DL Count (uplink/downlink count) of the relay link is directed to the backhaul UE of a backhaul link, and not to the UE under the self-backhaul base station, while status information such as the PDCP SN and UL/DL Count of the access link is directed to different UEs under the access link. As the source base station of the handover, the self-backhaul base station needs to send the status information such as the PDCP SN and UL/DL Count of the access link to the target base station; while the status information such as the PDCP SN and UL/DL Count of the relay link is processed together for different UEs under the access link, for example, the PDCP SN is numbered together. Therefore, the status information such as the PDCP SN and UL/DL Count of the relay link needs to be differentiated according to different UEs under the access link.

Because the different UEs under the relay link are numbered together, the PDCP SN of the UE that is handed over may be discontinuous. Therefore, the status information such as the PDCP SN of the UE that is handed over needs to be maintained on both the self-backhaul base station and the primary base station. According to the procedure in FIG. 7, the start sequence number of the UE that is handed over, which is buffered by the relay, is carried in the handover request acknowledgement message sent from the primary base station to the self-backhaul base station, or after the primary base station receives the information such as the PDCP SN of the relay link, the self-backhaul base station is informed of the data packet SN to be forwarded.

In addition, a logical mapping relationship may be established on the self-backhaul base station and the primary base station each to number the discontinuous PDCP SN of the UE that is handed over so as to change the discontinuous PDCP SN into a continuous SN which may be used for checking packet sending status of the relay link. According to the status information such as the relay link PDCP SN sent by the self-backhaul base station, the primary base station determines the buffered packets to be forwarded, and the buffered packets here do not need to carry the PDCP SN but are directly forwarded according to an original IP packet. If a GTP tunnel packet carries a Sequence Number (SN) in the GTP header, the self-backhaul base station and the primary base station (after obtaining the GTP tunnel information) may use the SN of the tunnel packet to determine respective packets that need to be forwarded to the target base station of the handover, and at this time, the primary base station carries the SN of the first buffered GTP packet in the handover request acknowledgement message; and the packet forwarded by the primary base station does not need to carry the PDCP SN but directly is forwarded to the target base station of the handover according to the original IP packet.

The self-backhaul base station needs to maintain the mapping relationship between the PDCP SN of the relay link and the PDCP SN of the access link, and ensure that the packets corresponding to the two SNs have the same sending status. If the SN in the GTP packet header is used as the status for the relay link to forward the packet, the self-backhaul base station needs to maintain the mapping relationship between the SN of the tunnel packet and the PDCP SN of the access link.

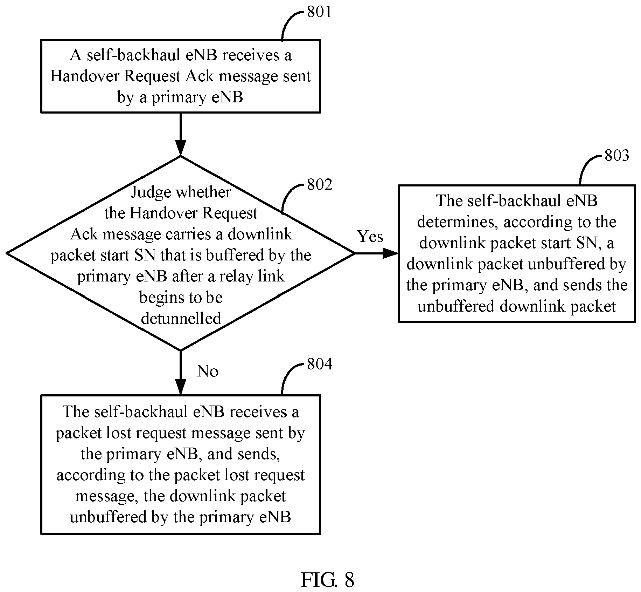

Based on the same inventive conception, an embodiment of the present invention also provides a method for handover processing in radio self-backhaul transmission. The processing procedure may be shown in FIG. 8, including the following steps:
Step 801: A self-backhaul base station receives a handover request acknowledgement message sent by a primary base station.

Step 802: The self-backhaul base station judges whether the handover request acknowledgement message carries a downlink packet start SN that is buffered by the primary base station after a relay link begins to be detunnelled, and if the handover request acknowledgement message carries the downlink packet start SN, execute step 803; otherwise, execute step 804.

Step 803: The self-backhaul base station determines, according to the downlink packet start SN, a downlink packet unbuffered by the primary base station, and sends the unbuffered downlink packet.

Step 804: The self-backhaul base station receives a packet lost request message sent by the primary base station, and sends, according to the packet lost request message, the downlink packet unbuffered by the primary base station.

In other embodiments of the present invention, the self-backhaul base station also sends an SN status transfer message, where the SN status transfer message carries the SN status information of the relay link and the SN status information of the access link; the self-backhaul base station also maintains the mapping relationship between the SN status information of the relay link and the SN status information of the access link.

The principle of the procedure as shown in FIG. 8 for solving problems is similar to the method of the embodiment in FIG. 7, and the specific steps are not described here again. As known from the procedure shown in FIG. 8, the self-backhaul base station does not need to send the downlink packets buffered by the primary base station, which avoids round-trip transmission of all downlink packet data between the primary base station and the self-backhaul base station, and may reduce the waste of radio resources between the primary base station and the self-backhaul base station, improve the air interface resource utilization and data transmission reliability, and shorten the packet transmission delay.

It is understandable to persons skilled in the art that all or part of the steps in the methods according to the foregoing embodiments may be performed by hardware instructed by a program. The program may be stored in a computer readable storage medium. When the program runs, all or part of the steps of the methods may be executed. The storage medium may include a ROM, a RAM, a magnetic disk, and a CD-ROM.

An embodiment of the present invention also provides an eNB and a communication system, as described in the following embodiments. Because the principles for solving problems by these apparatuses are the same as the method for handover processing in radio self-backhaul transmission, the implementation of these apparatuses may refer to the implementation of the foregoing methods, and is not described here again.

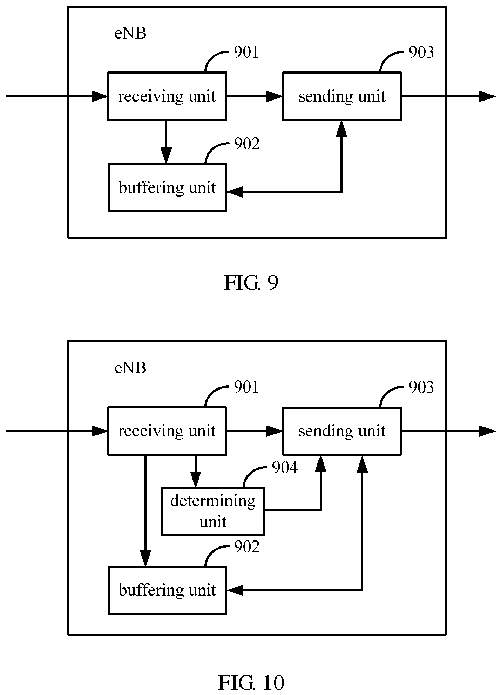

An embodiment of the present invention provides an eNB, the structure of which is shown in FIG. 9, and may include:
a receiving unit 901, configured to receive a handover request message sent by a self-backhaul base station;
a buffering unit 902, configured to buffer downlink packets after the receiving unit receives the handover request message sent by the self-backhaul base station; and
a sending unit 903, configured to send the buffered downlink packets to a terminal through a target base station.

In an embodiment, the sending unit 903 may be further configured to send a handover request acknowledgement message to the self-backhaul base station, where the handover request acknowledgement message carries a downlink packet start SN that is buffered by the primary base station after a relay link begins to be detunnelled; the receiving unit 901 may be further configured to receive an SN status transfer message sent by the self-backhaul base station; the sending unit 903 may be further configured to forward the SN status transfer message to the target base station, and forward to the target base station a downlink packet that is determined by the self-backhaul base station according to the downlink packet start SN and that is unbuffered by the primary base station.

As shown in FIG. 10, this embodiment is basically the same as the embodiment shown in FIG. 9, and the primary base station includes a receiving unit 901, a buffering unit 902, and a sending unit 903. The difference is that the primary base station may further include:
a determining unit 904, configured to determine a successfully sent downlink packet in the buffered downlink packets according to the SN status information of the relay link carried in the SN status transfer message.

In this case, the sending unit 903 may be further configured to no longer forward the successfully sent downlink packet to the target base station when forwarding the SN status transfer message to the target base station.

In another embodiment, the receiving unit 901 may be further configured to receive an end marker packet or signaling sent by the self-backhaul base station after the downlink packets are sent.

In another embodiment, the buffering unit 902 may further configured to stop detunnelling the downlink tunnel after the receiving unit captures the end marker packet or signaling sent from an S-GW to the self-backhaul base station; the sending unit 903 may be further configured to send the end marker packet or signaling to the target base station after forwarding all buffered downlink packets.

The base stations in FIG. 9 and FIG. 10 may be the primary base station in self-backhaul transmission.

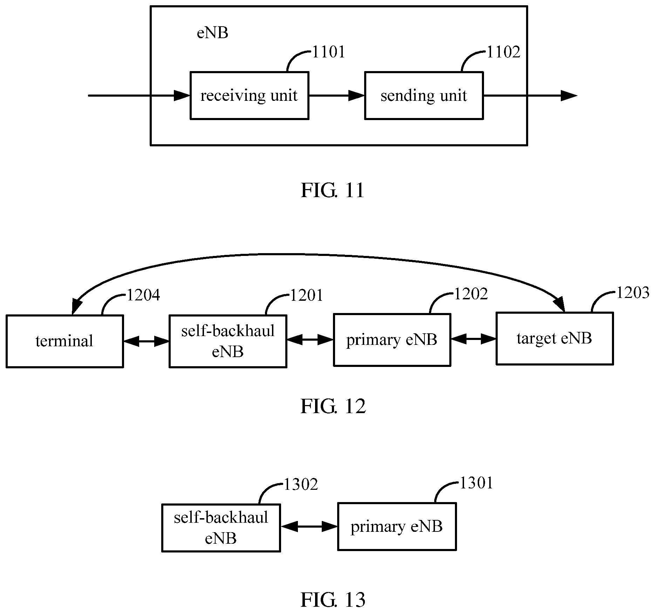

An embodiment of the present invention also provides an base station, the structure of which is shown in FIG. 11, and may include:
a receiving unit 1101, configured to receive a handover request acknowledgement message sent by a primary base station; and when the handover request acknowledgement message does not carry a downlink packet start SN, further receive a packet lost request message sent by the primary base station; and
a sending unit 1102, configured to: when the handover request acknowledgement message carries a downlink packet start SN that is buffered by the primary base station after a relay link begins to be detunnelled, determine, according to the downlink packet start SN, a downlink packet unbuffered by the primary base station, and send the unbuffered downlink packet; and after receiving the packet lost request message sent by the primary base station, send, according to the packet lost request message, the downlink packet unbuffered by the primary base station.

In another embodiment, the sending unit 1102 may be further configured to send an SN status transfer message, where the SN status transfer message carries the SN status information of the relay link and the SN status information of the access link.

The base station in FIG. 11 may be the self-backhaul base station in self-backhaul transmission.

An embodiment of the present invention also provides a communication system, the structure of which is shown in FIG. 12, and may include:
a self-backhaul base station 1201, configured to send a handover request message;
a primary base station 1202, configured to buffer downlink packets after receiving the handover request message sent by the self-backhaul base station, and send the buffered downlink packets;
a target base station 1203, configured to receive the buffered downlink packets sent by the primary base station, and send the buffered downlink packets; and
a terminal 1204, configured to receive the buffered downlink packets sent by the target base station.

An embodiment of the present invention also provides a communication system, the structure of which is shown in FIG. 13, and may include:
a primary base station 1301, configured to send a handover request acknowledgement message; and
a self-backhaul base station 1302, configured to: receive the handover request acknowledgement message sent by the primary base station; when the handover request acknowledgement message carries a downlink packet start SN that is buffered by the primary base station after a relay link begins to be detunnelled, determine, according to the downlink packet start SN, a downlink packet unbuffered by the primary base station, and send the unbuffered downlink packet; and when the handover request acknowledgement message does not carry the downlink packet start SN, receive a packet lost request message sent by the primary base station, and send, according to the packet lost request message, the downlink packet unbuffered by the primary base station.

In embodiments of the present invention, a primary base station buffers downlink packets after receiving a handover request acknowledgement message sent by a self-backhaul base station; the primary base station sends the buffered downlink packets to a terminal through a target base station; therefore, a seamless handover of radio self-backhaul transmission may be implemented without the need of performing round-trip transmission of all downlink packet data between the primary base station and the self-backhaul base station, which may not only reduce the waste of radio resources between the primary base station and the self-backhaul base station and improve the air interface resource utilization, but also improve data transmission reliability and shorten the packet transmission delay.

In embodiments of the present invention, a self-backhaul base station receives a handover request acknowledgement message sent by a primary base station; if the handover request acknowledgement message carries a downlink packet start SN that is buffered by the primary base station after a relay link begins to be detunnelled, the self-backhaul base station determines, according to the downlink packet start SN, a downlink packet unbuffered by the primary base station, and sends the unbuffered downlink packet; if the handover request acknowledgement message does not carry the downlink packet start SN, the self-backhaul base station receives a packet lost request message sent by the primary base station, and sends, according to the packet lost request message, the downlink packet unbuffered by the primary base station; therefore, the self-backhaul base station does not need to send the downlink packets buffered by the primary base station, which avoids round-trip transmission of all downlink packet data between the primary base station and the self-backhaul base station, and may reduce the waste of radio resources between the primary base station and the self-backhaul base station and improve the air interface resource utilization, and may also improve data transmission reliability and shorten the packet transmission delay.

The objective, technical solution, and benefits of the present invention have been described in detail with reference to the foregoing embodiments. It is understandable that these embodiments are exemplary and are not intended to limit the protection scope of the present invention. All modifications and variations made without departing from the idea and principle of the present invention shall fall within the protection scope of the present invention.

## Claims

1. A method for handover processing in radio self-backhaul transmission, comprising:
receiving (602, 702), by a primary base station, a handover request message sent by a self-backhaul base station;
**characterized by**
detunnelling, by the primary base station, a downlink tunnel to obtain a downlink packet according to downlink tunnel information in the handover request message;
buffering, by the primary base station, the downlink packet; and
sending (502), by the primary base station, the buffered downlink packet to a terminal through a target base station.

2. The method according to claim 1, further comprising:
sending (603; 703), by the primary base station, a handover request acknowledgement message to the self-backhaul base station, wherein the handover request acknowledgement message carries a downlink packet start sequence number that is buffered by the primary base station after a relay link begins to be detunnelled; and
forwarding to the target base station, by the primary base station, an sequence number status transfer message sent by the self-backhaul base station, and forwarding, by the self-backhaul base station, to the target base station a downlink packet that is determined by the self-backhaul base station according to the downlink packet start sequence number and that is unbuffered by the primary base station.

3. The method according to claim 2, further comprising:
according to sequence number status information of the relay link carried in the sequence number status transfer message, determining, by the primary base station, a successfully sent downlink packet in the buffered downlink packet, and not forwarding the successfully sent downlink packet to the target base station.

4. The method according to any one of the claims 1 to 3, further comprising:
stopping, by the primary base station after capturing an end marker packet or signaling sent from a serving-gateway to the self-backhaul base station, detunnelling a downlink tunnel; and
sending the end marker packet or signaling to the target base station by the primary base station after completing the forwarding the buffered downlink packet to the target base station.

5. A primary base station in self-backhaul transmission, comprising:
a receiving unit (901), configured to receive a handover request message sent by a self-backhaul base station;
**characterized by**
a buffering unit (902), configured to detunnel a downlink tunnel to obtain a downlink packet according to downlink tunnel information in the handover request message and to buffer the downlink packet; and
a sending unit (903), configured to send the buffered downlink packet to a terminal through a target base station.

6. The primary base station according to claim 5, wherein the sending unit (903) is further configured to send a handover request acknowledgement message to the self-backhaul base station, wherein the handover request acknowledgement message carries a downlink packet start sequence number that is buffered by the primary base station after a relay link begins to be detunnelled;
the receiving unit (901) is further configured to receive an sequence number status transfer message sent by the self-backhaul base station.

7. The primary base station according to claim 6, further comprising:
a determining unit (904), configured to determine a successfully sent downlink packet in the buffered downlink packet according to sequence number status information of the relay link carried in the sequence number status transfer message; wherein
the sending unit (903) is further configured not to forward the successfully sent downlink packet to the target base station when forwarding the sequence number status transfer message to the target base station.

8. The primary base station according to any one of the claims 5 to 7, wherein the buffering unit (902) is further configured to stop detunnelling a downlink tunnel after the receiving unit captures an end marker packet or signaling sent from a serving-gateway to the self-backhaul base station; and
the sending unit (902) is further configured to send the end marker packet or signaling to the target base station after completing the forwarding the buffered downlink packet to the target base station.

9. A communication system, comprising:
a self-backhaul base station (1201), configured to send a handover request message to a primary base station;
**characterized by**
a primary base station (1202), according to any one of the claims 5 to 8;
a target base station (1203), configured to receive a buffered downlink packet sent by the primary base station; and
a terminal (1204), configured to receive the buffered downlink packet sent by the target base station.

## Patentansprüche

1. Verfahren zur Weiterreichungsverarbeitung bei Funk-"Self-Backhaul"-Übertragung, das Folgendes umfasst:
Empfangen (602, 702) durch eine primäre Basisstation einer von einer "Self-Backhaul"-Basisstation gesendeten Weiterreichungsanforderungsnachricht;
**gekennzeichnet durch**
"Detunneling" durch die primäre Basisstation eines Abwärtstunnels, um ein Abwärtspaket gemäß Abwärtstunnelinformationen in der Weiterreichungsanforderungsnachricht zu erhalten;
Puffern durch die primäre Basisstation des Abwärtspakets und
Senden (502) durch die primäre Basisstation des gepufferten Abwärtspakets über eine Zielbasisstation zu einem Endgerät.

2. Verfahren nach Anspruch 1, das ferner Folgendes umfasst:
Senden (603; 703) durch die primäre Basisstation einer Weiterreichungsanforderungsbestätigungsnachricht zur "Self-Backhaul"-Basisstation, wobei die Weiterreichungsanforderungsbestätigungsnachricht eine Abwärtspaketstartsequenznummer transportiert, die von der primären Basisstation gepuffert wird, nachdem mit dem "Detunneling" einer Relaisverbindung begonnen wurde; und
Weiterleiten durch die primäre Basisstation einer von der "Self-Backhaul"-Basisstation gesendeten Sequenznummernstatustransfernachricht zur Zielbasisstation und Weiterleiten durch die "Self-Backhaul"-Basisstation eines Abwärtspakets zur Zielbasisstation, das von der "Self-Backhaul"-Basisstation gemäß der Abwärtspaketstartsequenznummer bestimmt und von der primären Basisstation entpuffert wird.

3. Verfahren nach Anspruch 2, das ferner Folgendes umfasst:
gemäß in der Sequenznummernstatustransfernachricht transportierten Sequenznummernstatusinformationen der Relaisverbindung Bestimmen durch die primäre Basisstation eines erfolgreich gesendeten Abwärtspakets im gepufferten Abwärtspaket und Nichtweiterleiten des erfolgreich gesendeten Abwärtspakets zur Zielbasisstation.

4. Verfahren nach einem der Ansprüche 1 bis 3, das ferner Folgendes umfasst:
Stoppen durch die primäre Basisstation nach Erfassen eines Endmarkierungspakets oder einer Endmarkierungssignalisierung, das bzw. die von einem bedienenden Gateway zur "Self-Backhaul"-Basisstation gesendet wird, des "Detunneling" eines Abwärtstunnels und
Senden durch die primäre Basisstation des Endmarkierungspakets bzw. der Endmarkierungssignalisierung zur Zielbasisstation nach Abschließen der Weiterleitung des gepufferten Abwärtspakets zur Zielbasisstation.

5. Primäre Basisstation in "Self-Backhaul"-Übertragung, die Folgendes umfasst:
eine Empfangseinheit (901), die dazu ausgelegt ist, eine von einer "Self-Backhaul"-Basisstation gesendete Weiterreichungsanforderungsnachricht zu empfangen;
**gekennzeichnet durch**
eine Pufferungseinheit (902), die zum "Detunneling" eines Abwärtstunnels ausgelet ist, um ein Abwärtspaket gemäß Abwärtstunnelinformationen in der Weiterreichungsanforderungsnachricht zu erhalten und das Abwärtspaket zu puffern; und
eine Sendeeinheit (903), die dazu ausgelegt ist, das gepufferte Abwärtspaket über eine Zielbasisstation zu einem Endgerät zu senden.

6. Primäre Basisstation nach Anspruch 5, wobei die Sendeeinheit (903) ferner dazu ausgelegt ist, eine Weiterreichungsanforderungsbestätigungsnachricht zur "Self-Backhaul"-Basisstation zu senden, wobei die Weiterreichungsanforderungsbestätigungsnachricht eine Abwärtspaketstartsequenznummer transportiert, die von der primären Basisstation gepuffert wird, nachdem mit dem "Detunneling" einer Relaisverbindung begonnen wurde;
die Empfangseinheit (901) ferner dazu ausgelegt ist, eine von der "Self-Backhaul"-Basisstation gesendete Sequenznummernstatustransfernachricht zu empfangen.

7. Primäre Basisstation nach Anspruch 6, die ferner Folgendes umfasst:
eine Bestimmungseinheit (904), die dazu ausgelegt ist, gemäß in der Sequenznummernstatustransfernachricht transportierten Sequenznummernstatusinformationen der Relaisverbindung ein erfolgreich gesendetes Abwärtspaket im gepufferten Abwärtspaket zu bestimmen; wobei die Sendeeinheit (903) ferner dazu ausgelegt ist, das erfolgreich gesendete Abwärtspaket nicht zur Zielbasisstation weiterzuleiten, wenn die Sequenznummernstatustransfernachricht zur Zielbasisstation weitergeleitet wird.

8. Primäre Basisstation gemäß einem der Ansprüche 5 bis 7, wobei die Pufferungseinheit (902) ferner dazu ausgelegt ist, das "Detunneling" eines Abwärtstunnels zu stoppen, nachdem die Empfangseinheit ein Endmarkierungspaket bzw. eine Endmarkierungssignalisierung erfasst, das bzw. die von einem bedienenden Gateway zur "Self-Backhaul"-Basisstation gesendet wird; und
die Sendeeinheit (902) ferner dazu ausgelegt ist, das Endmarkierungspaket bzw. die Endmarkierungssignalisierung zur Zielbasisstation zu senden, nachdem die Weiterleitung des gepufferten Abwärtspakets zur Zielbasisstation abgeschlossen ist.

9. Kommunikationssystem, das Folgendes umfasst:
eine "Self-Backhaul"-Basisstation (1201), die dazu ausgelegt ist, eine Weiterreichungsanforderungsnachricht zu einer primären Basisstation zu senden;
**gekennzeichnet durch**
eine primäre Basisstation (1202) nach einem der Ansprüche 5 bis 8;
eine Zielbasisstation (1203), die dazu ausgelegt ist, ein von der primären Basisstation gesendetes Abwärtspaket zu puffern; und
ein Endgerät (1204), das dazu ausgelegt ist, das von der Zielbasisstation gepufferte Abwärtspaket zu empfangen.

## Revendications

1. Procédé de traitement de transfert dans une transmission d'autocollecte radio, consistant à :
recevoir (602, 702) par une station de base primaire un message de demande de transfert envoyé par une station de base d'autocollecte ;
**caractérisé en ce qu'**il consiste à :
détunneliser par la station de base primaire un tunnel de liaison descendante afin d'obtenir un paquet de liaison descendante en fonction d'informations de tunnel de liaison descendante dans le message de demande de transfert ;
mettre en tampon par la station de base primaire le paquet de liaison descendante ; et
envoyer (502) par la station de base primaire le paquet de liaison descendante mis en tampon vers un terminal via une station de base cible.

2. Procédé selon la revendication 1, consistant en outre à :
envoyer (603 ; 703) par la station de base primaire un message d'accusé de réception de demande de transfert vers la station de base d'autocollecte, lequel message d'accusé de réception de demande de transfert comprend un numéro de séquence de début de paquet de liaison descendante qui est mis en tampon par la station de base primaire une fois qu'une liaison de relais commence à être détunnelisée ; et
envoyer à la station de base cible, par la station de base primaire, un message de transfert de statut de numéro de séquence envoyé par la station de base d'autocollecte, et envoyer par la station de base d'autocollecte, vers la station de base cible, un paquet de liaison descendante qui est déterminé par la station de base d'autocollecte en fonction du numéro de séquence de début de paquet de liaison descendante et qui est extrait du tampon par la station de base cible.

3. Procédé selon la revendication 2, consistant en outre, en fonction d'informations de statut du numéro de séquence de la liaison de relais comprise dans le message de transfert de statut de numéro de séquence, à déterminer par la station de base primaire un paquet de liaison descendante envoyé avec succès dans le paquet de liaison descendante mis en tampon, et ne pas envoyer le paquet de liaison descendante envoyé avec succès vers la station de base cible.

4. Procédé selon l'une quelconque des revendications 1 à 3, consistant en outre à :
interrompre, par la station de base primaire après avoir capturé un paquet de marqueur de fin ou une signalisation envoyée depuis une passerelle de service vers la station de base d'autocollecte, la détunnelisation d'un tunnel de liaison descendante ; et
envoyer le paquet de marqueur de fin ou la signalisation à la station de base cible par la station de base primaire une fois terminé l'envoi du paquet de liaison descendante mis en tampon vers la station de base cible.

5. Station de base primaire dans une transmission d'autocollecte, comprenant :
une unité de réception (901) conçue pour recevoir un message de demande de transfert envoyé par une station de base d'autocollecte ;
**caractérisée par** :
une unité de mise en tampon (902) conçue pour détunneliser un tunnel de liaison descendante pour obtenir un paquet de liaison descendante en fonction d'informations de tunnel de liaison descendante dans le message de demande de transfert et mettre en tampon le paquet de liaison descendante ; et
une unité d'envoi (903) conçue pour envoyer le paquet de liaison descendante mis en tampon à un terminal via une station de base cible.

6. Station de base primaire selon la revendication 5, dans laquelle :
l'unité d'envoi (903) est en outre conçue pour envoyer un message d'accusé de réception de demande de transfert vers la station de base d'autocollecte, lequel message d'accusé de réception de demande de transfert comprend un numéro de séquence de début de paquet de liaison descendante qui est mis en tampon par la station de base primaire une fois qu'une liaison de relais commence à être détunnelisée ; et
l'unité de réception (901) est en outre conçue pour recevoir un message de transfert de statut de numéro de séquence envoyé par la station de base d'autocollecte.

7. Station de base primaire selon la revendication 6, comprenant en outre :
une unité de détermination (904) conçue pour déterminer un paquet de liaison descendante envoyé avec succès dans le paquet de liaison descendante mis en tampon en fonction d'informations du statut du numéro de séquence de la liaison de relais comprise dans le message de transfert de statut de numéro de séquence ; dans laquelle
l'unité d'envoi (903) est en outre conçue pour ne pas envoyer le paquet de liaison descendante envoyé avec succès vers la station de base cible lors de l'envoi du message de transfert de statut de numéro de séquence vers la station de base cible.

8. Station de base primaire selon l'une quelconque des revendications 5 à 7, dans laquelle :
l'unité de mise en tampon (902) est en outre conçue pour interrompre la détunnelisation d'un tunnel de liaison descendante une fois que l'unité de réception a capturé un paquet de marqueur de fin ou une signalisation envoyée depuis une passerelle de service vers la station de base d'autocollecte ; et
l'unité d'envoi (902) est en outre conçue pour envoyer le paquet de marqueur de fin ou la signalisation à la station de base cible une fois terminé l'envoi du paquet de liaison descendante mis en tampon vers la station de base cible.

9. Système de communication comprenant :
une station de base d'autocollecte (1201) conçue pour envoyer un message de demande de transfert à une station de base primaire ;
**caractérisé par** :
une station de base primaire (1202) selon l'une quelconque des revendications 5 à 8 ;
une station de base cible (1203) conçue pour recevoir un paquet de liaison descendante mis en tampon envoyé par la station de base primaire ; et
un terminal (1204) conçu pour recevoir le paquet de liaison descendante mis en tampon envoyé par la station de base cible.
